# EUROPÄISCHE PATENTANMELDUNG

(11) **EP 4 455 202 A1**
(43) Veröffentlichungstag der Anmeldung: **30.10.2024**
(21) Anmeldenummer: 23170255.6
(22) Anmeldetag: 27.04.2023
(51) Int. Cl.: C08K 3/34, C08K 5/09, C09J 9/00, C09J 103/04, D21H 19/40, D21H 19/54, C08K 5/1545

(54) **HOCHLEISTUNGSFÄHIGES, FORMSTABILES, ABREIBBARES KLEBEMITTEL ENTHALTEND PLÄTTCHENFÖRMIGE PARTIKEL**

(71) Anmelder: Henkel AG & Co. KGaA, 40589 Düsseldorf (DE)
(72) Erfinder: HALBHERR, Markus, 44807 Bochum (DE); PHILIPPEN, Jens, 40591 Düsseldorf (DE); KAULISCH, Anna, 40764 Langenfeld (DE); HELLWIG, Nils, 47800 Krefeld (DE)

(57) **Zusammenfassung**

Die vorliegende Erfindung betrifft eine wasserbasierte, formstabile Zubereitung enthaltend eine transluzente, Wasser basierte polymerhaltige Trägermasse und plättchenförmige Feststoffpartikel, wobei die plättchenförmigen Feststoffpartikel einen mittleren größten Partikeldurchmesser im Bereich von 50 bis 1.000 µm aufweisen. Die plättchenförmigen Feststoffpartikel sind dabei für einen durch das menschliche Auge deutlich wahrnehmbaren Glanzeffekt bei gleichzeitig guten Abriebseigenschaften in einem durch die gewählte Partikelgröße vorbestimmten Volumenanteil in der Zubereitung enthalten. Darüber hinaus besitzen erfindungsgemäße Zubereitungen in einem Teilaspekt der vorliegenden Erfindung klebende Eigenschaften, so dass der abgeriebene Film zur Befestigung von flächigen Dekorelementen oder allgemein zum Verkleben flächiger, poröser Werkstoffe bestens geeignet ist.

## Beschreibung

Die vorliegende Erfindung betrifft eine wasserbasierte, formstabile Zubereitung enthaltend eine transluzente, wasserbasierte Trägermasse und plättchenförmige Feststoffpartikel, wobei die plättchenförmigen Feststoffpartikel einen mittleren größten Partikeldurchmesser im Bereich von 50 bis 1.000 µm aufweisen. Die plättchenförmigen Feststoffpartikel sind dabei für einen durch das menschliche Auge deutlich wahrnehmbaren Glitzereffekt bei gleichzeitig guten Abriebseigenschaften in einer bestimmten Menge in der Zubereitung enthalten. Darüber hinaus besitzen erfindungsgemäße Zubereitungen in einem Teilaspekt der vorliegenden Erfindung klebende Eigenschaften, so dass der abgeriebene Film zur Befestigung von flächigen Dekorelementen oder allgemein zum Verkleben flächiger, poröser Werkstoffe bestens geeignet ist.

Konsumentenartikel zur farblichen Gestaltung von Papier, Kartonagen und Vliesen werden im Markt in unterschiedlichsten Darreichungsformen vertrieben, bspw. in Form von Malstiften, Pinselfarben, Kreiden, Stickern und Ähnlichem. Derartige Konsumentenartikel sollen im Regelfall, gerade wenn sie ausschließlich in Verbindung mit kreativen Tätigkeiten, wie Malen und Basteln, Verwendung finden, eine außergewöhnliche Gestaltung der genannten Materialien ermöglichen. Es ist seit jeher bekannt und üblich, Pigmente als Träger eines optischen Effektes, sei es Farbe, Glanz oder Leuchtkraft, einzusetzen, um Gegenständen des täglichen Bedarfs oder der künstlerischen Gestaltung erfolgreich einen höheren ästhetischen Wert zu verleihen. Demgemäß sind Stifte zur farblichen Gestaltung kommerziell erhältlich, die eine permanente linien- und flächenförmige Gestaltung derart ermöglichen, dass neben dem Kenntlichmachen der Linien und Flächen zugleich mit der Tinte auch Pigmente aufgetragen werden. Die dabei im gestalteten Bereich aufgetragenen Pigmente vermitteln aufgrund ihrer Reflexionseigenschaften gegenüber sichtbarem Licht einen Glanzeffekt, der bei Änderung der relativen Lage der Papieroberfläche zum einfallenden Licht im gestalteten Bereich Lichtreflexe in Erscheinung treten lässt. Der Betrachter nimmt die Vielzahl der Lichtreflexe während einer solchen relativen Lageänderung als Glitzereffekt wahr.

Für einen solchen Glitzereffekt können plättchenförmige partikuläre Feststoffe bspw. als Granulat oder Pulver, verwendet werden, die bereits das Glanzpigment mit den entsprechenden optischen Eigenschaften darstellen oder es zumindest auf ihrer Oberfläche oder oberflächennah immobilisiert enthalten.

Es sind unterschiedlichste Zubereitungen von insbesondere für flächige, poröse Werkstoffe geeigneten Klebstoffen bekannt, die gerade in jüngerer Zeit auf flüssigen oder formstabilen Klebstoffzubereitungen beruhen, die im Wesentlichen aus nachwachsenden Rohstoffen, beispielsweise Stärkederivaten und Zucker, sowie Wasser bestehen und beispielsweise in den Offenlegungsschriften WO 2012/110594 A1, WO 2015/107149 A1 und DE 10 2015 219 309 A1genauer spezifiziert sind. Derartige wasserbasierte Zubereitungen stellen besondere Anforderungen an den das Pigment enthaltenden partikulären Feststoff, da für einen Glitzereffekt, der auch nach langer Lagerung der Klebstoffzubereitung erhalten bleiben soll, die Korrosion der Pigmente also die molekulardisperse Auflösung selbiger in der Klebstoffzubereitung verhindert werden muss.

Vorliegend problematisch ist, dass die Darreichungsform der partikulären Feststoffe enthaltend das Glanzpigment die Eigenschaft besitzen muss, dass die partikulären Feststoffe mit ihrer Hilfe gleichmäßig auf dem flächigen Substrat aufgebracht werden können. Für feste Zubereitungen muss gewährleistet sein, dass ein homogener, möglichst dünner Film der Zubereitung enthaltend den partikulären Feststoff auf dem flächigen Substrat abgerieben wird. Dies ist bislang gelungen mit kleinen organischen Partikeln, die eine mittlere Partikelgröße von weniger als 50 µm aufweisen und aus polymeren Filmen bestehen. Es wird ein Glitzereffekt erzielt. Ferner werden bei diesen bekannten Zubereitungen die Eigenschaften Einarbeitbarkeit in ein gebrauchsfertiges Klebeprodukt und dessen Applizierbarkeit bereitgestellt. Die geringe Partikelgröße der Feststoffpartikel der bekannten Zubereitungen ist ferner mit dem Nachteil verbunden, dass die Menge der Feststoffpartikel groß sein muss, um einen ausreichenden Glitzereffekt zu erzielen. Die große Menge zieht jedoch andere Produkteigenschaften in Mitleidenschaft.

Es ist die Aufgabe der vorliegenden Erfindung, eine Zubereitung bereitzustellen, die nachhaltig ist und mit einer geringeren Menge an partikulärem Material, insbesondere ohne mikroplastikbasierten enthaltende Partikeln auskommt. Die Klebezubereitung soll eine verbesserte Auftragbarkeit und ein verbessertes Produkterlebnis bereitstellen. Ferner ist es Aufgabe der vorliegenden Erfindung, den Glitzereffekt zu verbessern, ohne andere Produkteigenschaften, insbesondere das Produkterlebnis und Klebefähigkeit (Adhäsionskraft), zu beeinträchtigen. Ferner soll auf kostenintensive und/oder schlecht verfügbare Rohmaterialien verzichtet werden. Gleichzeitig soll die Auftragung des Films nur im Kontaktbereich mit der Darreichungsform erfolgen und in weitgehend gleichmäßiger Schichtdicke. Der Film soll in einem Teilaspekt Klebeeigenschaften aufweisen, die es vermögen poröse Substrate wie Papier stoffschlüssig miteinander zu verbinden.

Weiterhin ist es wünschenswert, der Darreichungsform noch die zusätzliche Eigenschaft zu verleihen, weitere Werkstoffe oder Dekorelemente stoffschlüssig verbinden zu können, also Klebeeigenschaften zu verbessern. Damit gelänge sowohl die rein ästhetische Gestaltung der Oberfläche als auch die kreative räumliche Gestaltung der flächigen Werkstoffe durch stoffschlüssiges Verbinden mittels ein und derselben Darreichungsform.

Die allgemeine der Erfindung zugrundeliegende Aufgabe wird gelöst durch eine Wasser basierte, formstabile Zubereitung bestehend aus einer transluzenten Trägermasse enthaltend Gerüstsubstanzen ausgewählt aus C12- bis C22-Fettsäuren und/oder deren Salzen in einer Menge von insgesamt weniger als 15 Gew.-% bezogen auf die Trägermasse und plättchenförmigen Feststoffpartikeln, wobei die plättchenförmigen Feststoffpartikel einen mittleren größten Partikeldurchmesser im Bereich von 50 bis 1.000 µm aufweisen und wobei die plättchenförmigen Feststoffpartikel in einer Menge von 0,1 bis 5 Gew.-% bezogen auf die Masse der Zubereitung in der Zubereitung enthalten sind.

Eine Zubereitung ist im Sinne der vorliegenden Erfindung formstabil, wenn eine zum Zylinder ausgeformte Masse der Zubereitung (10 Gramm) mit einer Grundfläche von 2 cm² bei Einwirkung einer stetig anwachsenden Kraft senkrecht zur Grundfläche des Zylinders bei 20 °C und 50% relativer Luftfeuchte erst oberhalb eines Druckes von 20N/cm² irreversibel deformiert wird. Die Einwirkung der Kraft und die Bestimmung des Eintritts der Deformation kann mittels eines Kraftmessgerätes verfolgt werden, bspw. mittels dem Texture Analyser TA-XT HiR (Stable Micro Systems Ltd.).

Eine formstabile Zubereitung ist im Sinne der vorliegenden Erfindung Wasser basiert, wenn sie zumindest 5 Gew.-% an Wasser enthält.

Unter Trägermasse wird im Sinne der vorliegenden Zubereitung derjenige Anteil der Zubereitung verstanden, der keine plättchenförmige Feststoffpartikel darstellt, wobei die Trägermasse transluzent ist. Eine Trägermasse ist transluzent, wenn selbige als zwischen zwei Glasplatten mit einem Schichtgewicht von zumindest 1 g/m² befindlicher Film sichtbares Licht (λ = 540 nm) bei Strahlengang vertikal zur Glasplattenoberfläche um nicht mehr als 20 % abschwächt.

Ein Feststoffanteil ist plättchenförmig, wenn er aus Einzelpartikeln besteht, die im orthogonal zur Achse ihrer größten Erstreckung durch den Schwerpunkt des Partikels verlaufenden Querschnitt eine Querschnittsfläche aufweisen, die ein Verhältnis von größter zu kleinster lateralen Ausdehnung von zumindest 4 : 1 besitzen. Der mittlere größte Partikeldurchmesser der plättchenförmigen Feststoffpartikel kann mittels Auswertung einer statistischen Probe der erfindungsgemäßen Zubereitung umfassend zumindest 50 plättchenförmige Partikel durch optische Einzelauswertung unter Zuhilfenahme lichtmikroskopischer Aufnahmen bestimmt werden.

Die Zubereitung besteht aus den plättchenförmigen Feststoffpartikeln und der transluzenten Trägermasse. Die Trägermasse kann neben den, bezogen auf die Trägermasse, weniger als 15 Gew.-% Gerüstsubstanzen weitere Komponenten enthalten. Die Trägermasse mit sämtlichen Komponenten hat transluzente Eigenschaften.

Eine erfindungsgemäße Zubereitung weist eine hervorragende Druckfestigkeit bei gleichzeitig optimalen Abriebeigenschaften auf, die es erlauben die plättchenförmigen Feststoffpartikel homogen und ohne vereinzelte Überschüsse, bspw. in Form von Klümpchen, über einem flächigen, porösen Substrat, vorzugsweise Papier, abzureiben, so dass bei entsprechender Ausrüstung der Feststoffpartikel ein homogener Glitzereffekt über die gesamte Abriebsfläche zum Tragen kommen kann. Zusätzlich äußert sich der optimierte Abrieb in einer für den Benutzer angenehmeren Anwendung; die Zubereitung gleitet besser über die zu gestaltende Oberfläche. Weiterhin wird beim Abrieb von Hand gerade so viel Trägermasse abgerieben, dass bei entsprechender stofflicher Ausrüstung der Trägermasse eine Verklebung mit anderen flächigen porösen Substraten, vorzugsweise Papier, möglich ist.

Im Folgenden sind bevorzugte Ausführungsformen der erfindungsgemäßen Zubereitung aufgeführt.

Hinsichtlich der plättchenförmigen Feststoffpartikel ist für eine geeignete Ausrüstung selbiger zur Bereitstellung eines Glitzereffektes bevorzugt, wenn die Feststoffpartikel zumindest teilweise aus einem schichtförmig ausgebildeten anorganischen Material bestehen, dass vorzugsweise einen mindestens um den Faktor 1,4 höheren Brechungsindex aufweist als die transluzente Trägermasse. Ist diese physikalische Eigenschaft erfüllt, tritt über einen weiten Einfallswinkel relativ zur Oberfläche eines jeden Partikels Totalreflexion ein, so dass bei gegebenen Betrachtungswinkeln auch bei statistischer räumlicher Ausrichtung der Partikel das auf einen abgeriebenen Film der Zubereitung einfallende Licht in einer Vielzahl von Lichtreflexen sichtbar wird (Glitzereffekt).

Im Stand der Technik werden zahlreiche beschichtete Glitterpartikel für verschiedenste Anwendungen eingesetzt. Meistens sind die Glitterpartikel Plastikpartikel, welche aus alternierenden Schichten (z.B. Polymethylmethacrylat und Polyethylenterephthalat, etc.) aufgebaut sind, um den Glitzereffekt hervorzurufen. Gemäß einer bevorzugten Ausführungsform der vorliegenden Erfindung wird auf kunststoffbasierte Glitzerpartikel verzichtet. Dementsprechend ist es bevorzugt, dass die plättchenförmigen Feststoffpartikel nicht-polymere plättchenförmige Feststoffpartikel sind. Der Begriff nicht-polymere plättchenförmige Feststoffpartikel meint, dass keine polymeren Bestandteile von den Feststoffpartikeln umfasst sind, wobei das Schichtsilikat Glimmer nicht unter den Begriff "Polymer" fällt. Der Ausschluss von polymeren Bestandteilen ist zum einen mit dem Vorteil verbunden, dass die Gefahr der Ablation der polymeren Beschichtung umgangen wird. Hierbei ist zu berücksichtigen, dass die Feststoffpartikel im Vergleich zu Effektpartikeln aus dem Stand der Technik groß sind, so dass die Gefahr der Ablation größer ist. Zum anderen sind gerade partikuläre Polymere unter dem Stichwort Mikroplastik umweltrelevant.

Gemäß einer bevorzugten Ausführungsform bestehen die plättchenförmigen Feststoffpartikel aus einem oder aus mehreren anorganischen Materialien.

Die plättchenförmigen Feststoffpartikel weisen einen mittleren größten Partikeldurchmesser im Bereich von 50 bis 1.000 µm, bevorzugt von 100 bis 800 µm, bevorzugter von 200 bis 600 µm auf, wobei die plättchenförmigen Feststoffpartikel in einer Menge von 0,1 bis 5 Gew.-%, bevorzugt 0,2 bis 2 Gew.-% und bevorzugter 0,4 bis 1 Gew.-% bezogen auf die Masse der Zubereitung in der Zubereitung enthalten sind. Während sich die Gewichtsanteile der plättchenförmigen Feststoffpartikel und der Trägermasse auf die Zubereitung als Ganze beziehen, beziehen sich die Gewichtsanteile der Bestandteile der transluzenten Trägermasse auf die Gesamtmasse der transluzenten Trägermasse.

Weiterhin erfindungsgemäß bevorzugt ist, wenn die plättchenförmigen Feststoffpartikel einen Schichtaufbau aufweisen, bei dem das schichtförmig ausgebildete anorganische Material von zwei benachbarten Metalloxidschichten begrenzt wird, die jeweils transluzent sind. Hierüber wird gewährleistet, dass das schichtförmig ausgebildete anorganische Material weitestgehend vor Korrosion geschützt ist. Dies ist vorliegend von Bedeutung, da die Zubereitung Wasser basiert ist und als solche einen Lösungsdruck auf das anorganische Material ausübt, der die Dissoziation in ionogene Bestandteile und somit eine Korrosion der den Glitzereffekt hervorrufenden Schicht bewirkt.

Das schichtförmig ausgebildete anorganische Material, das dem plättchenförmigen Partikel die Eigenschaft verleiht als glänzend oder im Verbund einer Vielzahl solcher Partikel bei relativer Lageänderung als glitzernd wahrgenommen zu werden, kann grundsätzlich aus einer Vielzahl an synthetischen oder natürlichen Schichtsilikaten ausgewählt sein. Erfindungsgemäß verwendbaren Materialien sind bevorzugt synthetische oder natürliche Schichtsilikate auf Basis von Glimmer. Bevorzugter sind die plättchenförmigen Feststoffpartikel ausgewählt aus der Gruppe bestehend aus einem synthetischen oder natürlichen Kalium-Alumosilikat, Kalium-Magnesium-Alumosilikat, Kalium-Aluminium-Alumosilikat, Kalium-Eisen-Alumosilikat, Kalium-Lithium-Aluminium-Alumosilikat, Natrium-Magnesium-Alumosilikat oder Natrium-Magnesium-Aluminium-Alumosilikat. Die genannten Alumosilikate sind sämtlich Schichtsilikate aus der Glimmergruppe.

In einer bevorzugten erfindungsgemäßen Zubereitung ist das anorganische Material ausgewählt aus metallischem Zink, Kupfer und/oder Aluminium, aus Silikaten, und/oder aus Oxiden der Elemente Eisen, Titan, Zirkonium und/oder Aluminium.

Bevorzugt sind die plättchenförmigen Feststoffpartikel in erfindungsgemäßen Zubereitungen Glimmer, die beidseitig mit Metalloxiden beschichtet sind. Bevorzugte Metalloxidschichten sind ausgewählt aus Titanoxid, Zinn(IV)-oxid, Eisen(III)-oxid oder verschiedenen Kombinationen dieser.

Neben der transluzenten Trägermasse besteht die Zubereitung, bezogen auf die Gesamtmasse der Zubereitung, aus 0,1 bis 5 Gew.-%, bevorzugt 0,2 bis 2 Gew.-% und bevorzugter 0,4 bis 1 Gew.-% der plättchenförmigen Feststoffpartikel. Dementsprechend umfasst die Zubereitung 95 bis 99,9 Gew.-%, bevorzugt 98 bis 99,8 Gew.-% und bevorzugter 99,6 bis 99 Gew.-% transluzente Trägermasse.

Die Eigenschaften der Zubereitung formstabil, aber dennoch gut abreibbar zu sein, wird vornehmlich durch die Anwesenheit der Gerüstsubstanzen bestimmt. Erfindungsgemäß ist daher bevorzugt, dass die transluzente Trägermasse zumindest 1 Gew.-%, besonders bevorzugt zumindest 2 Gew.-%, jedoch vorzugsweise nicht mehr als 10 Gew.-% an Gerüstsubstanzen ausgewählt aus C12- bis C22-Fettsäuren sowie deren Salze jeweils bezogen auf die Trägermasse enthält. In diesen bevorzugten Mengenbereichen werden der Wasser basierten Zubereitung Gerüsteigenschaften zuteil, die es dem Fachmann erlauben über weite Bereiche organische Verbindungen zu additivieren, ohne die grundsätzlichen Eigenschaften hinsichtlich Abreibbarkeit und Formstabilität notwendigerweise zu verlieren.

Bevorzugte Vertreter der Salze der C12- bis C22-Fettsäuren sind im Rahmen der vorliegenden Erfindung ausgewählt aus Natrium-, Kalium- und/oder Kalzium-Salzen.

Für die Bereitstellung einer klebenden Zubereitung mit zufriedenstellendem Leistungsspektrum ist es unabdingbar, dass weitere organische Bestandteile additiviert werden, gleichzeitig muss der Wasseranteil hinreichend groß sein, um eben eine solche Additivierung zu ermöglichen. Vorliegend ist daher zunächst bevorzugt, dass eine erfindungsgemäße Zubereitung zumindest 20 Gew.-% Wasser enthält und zusätzlich für hinreichend verklebende Eigenschaften von porösen flächigen Substraten, vorzugsweise zumindest 10 Gew.-% an wasserlöslichen oder wasserdispergierbaren organischen Polymeren jeweils bezogen auf die Trägermasse. Ein organisches Polymer ist im Sinne der vorliegenden Erfindung wasserlöslich oder wasserdispergierbar, wenn bei einer Temperatur von 20 °C zumindest 100 g des Polymers in 1000 g entionisiertem Wasser (κ < 1 µScm⁻¹) homogen gelöst und/oder mit einer mittleren Teilchendurchmesser von weniger als 200 nm dispergiert werden kann, ohne dass sich über einen Zeitraum von 10 h ein Bodensatz ausbildet.

In einer bevorzugten Ausführungsform einer erfindungsgemäßen Zubereitung, die insbesondere geeignet zur Verklebung von Papier ist, sind zumindest 20 Gew.-% an modifizierten Stärken bezogen auf die Trägermasse enthalten, die vorzugsweise als 40 Gew.-%ige wässrige Lösung bei 20 °C eine Viskosität von weniger als 200.000 mPas gemessen mit einem Brookfield-Viskosimeter aufweisen. Modifizierte Stärken sind in diesem Zusammenhang zu verstehen als zumindest teilweise chemisch, enzymatisch oder physikalisch modifizierte Stärken.

Weiterhin ist für gute klebende Eigenschaften bevorzugt, wenn die erfindungsgemäße Zubereitung zumindest 10 Gew.-% an ein oder mehreren Verbindungen ausgewählt aus Mono-, Di- oder Trisacchariden und/oder Zuckeralkoholen, besonders bevorzugt Saccharose, jeweils bezogen auf die Trägermasse enthält. Bevorzugt liegt der Gesamtanteil an Mono-, Di- oder Trisacchariden und Zuckeralkoholen jedoch bei unterhalb von 30 Gew.-% bezogen auf die Trägermasse einer erfindungsgemäßen Zubereitung.

Gemäß einer weiteren bevorzugten Ausführungsform enthält die transluzente Trägermasse einen Farbstoff. Bevorzugt enthält die transluzente Trägermasse zumindest 0,01 Gew.-%, vorzugsweise zumindest 0,05 Gew.-%, jedoch vorzugsweise nicht mehr als 2 Gew.-% des Farbstoffs jeweils bezogen auf die Trägermasse. Die Kombination aus dem Farbstoff und den Metalloxid beschichteten Feststoffpartikeln bietet den Vorteil, ein Höchstmaß an Farbspektrum abzudecken und auf partikuläre Mikroplastik zu verzichten.

In einer besonders bevorzugten Ausführungsform enthält sind in der Trägermasse einer erfindungsgemäßen Zubereitung
a) 3-10 Gew.-% an C12- bis C22-Fettsäuren sowie deren Salze;
b) 20-50 Gew.-% an modifizierten Stärken;
c) 10-30 Gew.-% an Saccharose; und
d) zumindest 30 Gew.-% an Wasser
jeweils bezogen auf die Trägermasse enthalten.

Der pH-Wert der Trägermasse einer erfindungsgemäßen Zubereitung wird im Wesentlichen durch die zuvor genannten Bestandteile bestimmt und liegt daher im alkalischen Bereich, vorzugsweise bei zumindest 9, besonders bevorzugt bei zumindest 10, jedoch vorzugsweise von nicht höher als 12. Der pH-Wert der Trägermasse einer erfindungsgemäßen Zubereitung ist in einer 1 Gew.-%igen Lösung der Trägermasse in entionisiertem Wasser bei 20 °C zu bestimmen.

### Ausführungsbeispiele:

Zylindrische formstabile Zubereitungen mit einer Grundfläche von 2 cm² und einer Masse von 10 Gramm auf Basis einer Trägermasse-Rezeptur (Tab.1) enthaltend variierende Mengen an Glitzerpartikeln wurden hergestellt und bezüglich ihrer Abriebseigenschaften und des Auftretens eines Glitzereffektes bei Raumbeleuchtung (1200 Lumen; 3300K, Abstand Leuchtmittel-Probe: ca. 2 m) als auf Papier mit einem Flächengewicht von g/m² abgeriebener Film bewertet. Das Abreiben des Films erfolgte über eine Länge von 10 cm mit einem Anpressdruck von 5 N/cm² bei einem Neigungswinkel von 10° relativ zur Papieroberfläche.

| Tab. 1 Rezeptur einer Trägermasse | |
|---|---|
| Verbindung | Menge / Gew.-% |
| Fettsäure C14-16 | 5,6 |
| Modifizierte Stärke | 23,9 |
| Saccharose | 20 |
| Wasser | 47 |

## Patentansprüche

1. Wasserbasierte, formstabile Zubereitung bestehend aus einer transluzenten Trägermasse enthaltend Gerüstsubstanzen ausgewählt aus C12- bis C22-Fettsäuren und/oder deren Salzen in einer Menge von insgesamt weniger als 15 Gew.-% bezogen auf die Trägermasse und plättchenförmigen Feststoffpartikeln, wobei die plättchenförmigen Feststoffpartikel einen mittleren größten Partikeldurchmesser im Bereich von 50 bis 1.000 µm aufweisen und wobei die plättchenförmigen Feststoffpartikel in einer Menge von 0,1 bis 5 Gew.-% bezogen auf die Masse der Zubereitung in der Zubereitung enthalten sind.

2. Zubereitung nach Anspruch 1, **dadurch gekennzeichnet, dass** die plättchenförmigen Feststoffpartikel zumindest teilweise aus einem schichtförmig ausgebildeten anorganischen Material bestehen, das vorzugsweise einen mindestens um den Faktor 1,4 höheren Brechungsindex aufweist als die Trägermasse.

3. Zubereitung nach Anspruch 2, **dadurch gekennzeichnet, dass** die plättchenförmigen Feststoffpartikel einen Schichtaufbau aufweisen, bei dem das schichtförmig ausgebildete anorganische Material von zwei benachbarten Metalloxidschichten begrenzt wird.

4. Zubereitung nach einem oder beiden der Ansprüche 2 oder 3, **dadurch gekennzeichnet, dass** die plättenförmigen Feststoffpartikel aus einem anorganischen Material bestehen.

5. Zubereitung nach einem oder mehreren der Ansprüche 2 bis 4, **dadurch gekennzeichnet, dass** das anorganische Material ein synthetisches oder natürliches Schichtsilikat ist, bevorzugt ein synthetisches oder natürliches Schichtsilikat des Glimmer, bevorzugter ausgewählt aus der Gruppe bestehend aus einem synthetischen oder natürlichen Kalium-Alumosilikat, Kalium-Magnesium-Alumosilikat, Kalium-Aluminium-Alumosilikat, Kalium-Eisen-Alumosilikat, Kalium-Lithium-Aluminium-Alumosilikat, Natrium-Magnesium-Alumosilikat oder Natrium-Magnesium-Aluminium-Alumosilikat des Glimmer ist.

6. Zubereitung nach einem oder mehreren der Ansprüche 3 bis 5, **dadurch gekennzeichnet, dass** die Metalloxidschichten ausgewählt sind aus Titanoxid, Zinn(IV)-oxid, Eisen(III)-oxid oder verschiedenen Kombinationen dieser.

7. Zubereitung nach einem oder mehreren der vorherigen Ansprüche, **dadurch gekennzeichnet, dass** die transluzente Trägermasse zumindest 1 Gew.-%, vorzugsweise zumindest 2 Gew.-%, jedoch vorzugsweise nicht mehr als 10 Gew.-% an Gerüstsubstanzen ausgewählt aus C12-bis C22-Fettsäuren sowie deren Salze jeweils bezogen auf die Trägermasse enthält.

8. Zubereitung nach einem oder mehreren der vorherigen Ansprüche, **dadurch gekennzeichnet, dass** die Salze der C12- bis C22-Fettsäuren ausgewählt sind aus Natrium-, Kalium- und/oder Kalzium-Salzen.

9. Zubereitung nach einem oder mehreren der vorherigen Ansprüche, **dadurch gekennzeichnet, dass** die transluzente Trägermasse zumindest 20 Gew.-% Wasser bezogen auf die Trägermasse enthält.

10. Zubereitung nach einem oder mehreren der vorherigen Ansprüche, **dadurch gekennzeichnet, dass** die Trägermasse einen pH-Wert von zumindest 9, vorzugsweise von zumindest 10, jedoch vorzugsweise von nicht höher als 12 aufweist.

11. Zubereitung nach einem oder mehreren der Ansprüche 7 bis 10, **dadurch gekennzeichnet, dass** die Trägermasse zumindest 20 Gew.-% an modifizierten Stärken bezogen auf die Trägermasse enthält, die vorzugsweise als 40 Gew.-%ige wässrige Lösung bei 20 °C eine Viskosität von weniger als 200.000 mPas aufweisen.

12. Zubereitung nach Anspruch 11, **dadurch gekennzeichnet, dass** die Trägermasse zumindest 10 Gew.-% an Saccharose bezogen auf die Trägermasse enthält.

13. Zubereitung nach einem oder mehreren der vorherigen Ansprüche, **dadurch gekennzeichnet, dass** die transluzente Trägermasse einen Farbstoff enthält, bevorzugt zumindest 0,01 Gew.-%, vorzugsweise zumindest 0,05 Gew.-%, jedoch vorzugsweise nicht mehr als 2 Gew.-% des Farbstoffs jeweils bezogen auf die Trägermasse enthält.

14. Zubereitung nach einem oder mehreren der vorherigen Ansprüche, **dadurch gekennzeichnet, dass** die Trägermasse
a) 3-10 Gew.-% an C12- bis C22-Fettsäuren sowie deren Salze;
b) 20-50 Gew.-% an modifizierten Stärken;
c) 10-30 Gew.-% an Saccharose; und
d) zumindest 30 Gew.-% an Wasser
jeweils bezogen auf die Trägermasse enthält.
